# EUROPÄISCHE PATENTSCHRIFT

(11) **EP 2 729 245 B1**
(45) Veröffentlichungstag und Bekanntmachung des Hinweises auf die Patenterteilung: **18.05.2016**
(21) Anmeldenummer: 12730000.2
(22) Anmeldetag: 29.06.2012
(51) Int. Cl.: B01J 19/24

(54) **REAKTOR FÜR DIE KATALYTISCHE UMSETZUNG VON REAKTIONSMEDIEN**
REACTOR FOR THE CATALYTIC CONVERSION OF REACTION MEDIA
RÉACTEUR POUR LA CONVERSION CATALYTIQUE DE MILIEUX DE RÉACTION

(30) Priorität: 07.07.2011 DE 202011050657 U
(43) Veröffentlichungstag der Anmeldung: 14.05.2014
(73) Patentinhaber: DEG Engineering GmbH, 45881 Gelsenkirchen (DE)
(72) Erfinder: MAROLD, Freimut, 46282 Dorsten (DE)
(74) Vertreter: Nunnenkamp, Jörg
(86) Internationale Anmeldenummer: PCT/EP2012/062771
(87) Internationale Veröffentlichungsnummer: WO 2013/004641

(56) Entgegenhaltungen:
- WO-A1-2005/063375
- DE-A1- 19 725 378
- FR-A1- 2 934 174
- US-A1- 2005 032 640

## Beschreibung

Die Erfindung betrifft einen Reaktor für die katalytische Umsetzung von Reaktionsmedien in einem Reaktionsraum mittels eines Katalysators, mit einem Plattenwärmetauscher in einem Reaktorbehälter, wobei sich der Plattenwärmetauscher im Wesentlichen aus voneinander durch flächig ausgebildete Füllkörper getrennten Wärmetauscherplatten zusammensetzt, welche zwischen sich den vom Reaktionsmedium durchströmten Reaktionsraum definieren.

Solche Reaktoren werden sowohl für exothermische als auch endothermische Reaktionen eingesetzt. In erstgenanntem Fall dient der Plattenwärmetauscher zur Wärmeabfuhr aus dem Reaktorbehälter. Bei der letztgenannten Variante wird der Plattenwärmetauscher für die Wärmezufuhr genutzt. Im allgemeinen kommen Katalysatoren in Gestalt von rieselfähigen Katalysatorpartikeln zum Einsatz, die im Zwischenraum bzw. Plattenzwischenrau zwischen den einzelnen Wärmetauscherplatten des Plattenwärmetauschers eingeschlossen werden. Dadurch entsteht nicht nur ein bzw. entstehen mehrere Reaktionsräume, sondern werden mit Hilfe der Wärmetauscherplatten auch Wärmetransporträume definiert, in welchen das Wärmeträgermedium geführt wird.

Solche Reaktoren sind hinlänglich bekannt und haben sich bewährt, wozu auf die DE 197 54 185 C1 verwiesen sei. Zwischen den benachbarten Wärmetauscherplatten, im Plattenzwischenraum, findet sich der vom jeweiligen Reaktionsmedium durchströmte Katalysator und bildet ein Festbett. Die Wärmetauscherplatten sind als von einem Kühlmedium durchströmte Thermobleche ausgebildet. Sie setzen sich aus zumindest zwei Blechplatten aus Stahl zusammen, die an vorgegebenen Punkten unter Bildung von Strömungskanälen zusammengefügt sind. Der Plattenwärmetauscher ist auf einen Siebboden aufgesetzt, dessen Maschenweite geringer als die Korngröße der Katalysatorpartikel ausgelegt ist.

Für den Fall, dass bei solchen Reaktoren der Katalysator bzw. die Katalysatorpartikel erschöpft sind, wird ein Austausch besagter Partikel gefordert. Gleiches gilt für den Fall, dass die Katalysatorpartikel vergiftet oder sonst wie verbraucht sind. Das setzt typischerweise einen ganz oder teilweisen Zerlegevorgang des Reaktors voraus.

Aus diesem Grund hat man im Rahmen der EP 1 234 612 A2 eine Alternative derart geschaffen, dass der Katalysator in Form einer dünnen Schicht auf zumindest einen Teil der gesamten Fläche der Wärmetauscherplatten bzw. Thermobleche aufgebracht wird. Dadurch wird primär verhindert, dass im Laufe des bestimmungsgemäßen Einsatzes des Reaktors die einzelnen Katalysatorpartikel verkleben können und dann nur mit großem Aufwand aus dem Reaktor wieder zu entfernen sind. Darüber hinaus verhindert diese Vorgehensweise, dass sich Katalysatorkörner bzw. Katalysatorpartikel gegenüber den einzelnen Thermoblechen verkeilen. Dieses Phänomen kann im Extremfall sogar dazu führen, dass Hohlräume gebildet werden, in welchen keine Katalysatorpartikel vorhanden sind. Das ist für eine gleichmäßige, gefahrlose und effiziente Verfahrensführung bei der Umsetzung des Reaktionsmediums natürlich nicht akzeptabel.

Jedenfalls erhofft man sich, mit der bekannten Vorgehensweise entsprechend der EP 1 234 612 A2 die insgesamt nutzbare Kühl-/Heizfläche pro Reaktionsraumvolumen steigern zu können, wobei in diesem Fall Werte von 150 m²/m³ als Untergrenze angegeben werden. - Die zuvor geschilderten Probleme beim Verbrauch des Katalysators, seiner etwaigen Vergiftung und insbesondere im Zusammenhang mit dem Austausch des Katalysators sind durch diese Maßnahmen nicht gelöst worden.

Das gilt auch für den gattungsgemäßen Reaktor entsprechend der FR 2 934 174 A1 und der EP 2 045 006 A1. Hier ist der Reaktor jeweils mit flächigen Abstandshaltern ausgerüstet, die zwischen zwei Thermoblechen als Wärmetauscherplatten angeordnet sind. Durch die Abstandshalter soll eine verbesserte Reinigung und Wartung der Wärmetauscherplatten ermöglicht werden. Außerdem erhofft man sich durch die Abstandshalter eine gesteigerte Stabilität. Das gilt insbesondere für den Fall, dass mit einzelnen Thermoblechmodulen aus Plattenpaketen gearbeitet wird. Bei der bekannten Lehre kommt auch ein als geschlossener Kasten ausgelegter flächiger Abstandhalter zum Einsatz, welcher in seinem Inneren mit Vorrichtungen zum Erfassen von Reaktionsparametern ausgerüstet ist. Hierbei mag es sich beispielsweise um Messfühler oder auch Düsen zur Durchführung einer Reinigungsfunktion handeln. Auch eine Auslegung der flächigen Abstandshalter als Katalysatorkörbe wird beschrieben. Allerdings gilt unverändert, dass der fragliche Abstandshalter zwischen den beiden Thermoblechen angeordnet ist bzw. diese miteinander verbindet. Ein etwaiger Austausch des Katalysators stellt sich folglich nach wie vor schwierig dar.

Im Rahmen der DE 100 31 347 A1 wird ein Reaktor mit Wärmetauscherplatten beschrieben, der in herkömmlicher Art und Weise mit einer Katalysatorschüttung zwischen einzelnen Wärmetauscherplatten arbeitet. Dabei sind spezielle Entleerungseinrichtungen vorgesehen, um einen Katalysatorablauf bei Bedarf zu ermöglichen.

Die schließlich noch zu nennende US 3 528 783 betrifft einen katalytischen Reaktor in Sandwich-Bauweise. Dabei wird typischerweise eine Wärmetauscherplatte mit dem Katalysatormaterial belegt und anschließend eine weitere Wärmetauscherplatte aufgebracht. Probleme des Katalysatoraustausches spielen keine Rolle. Hier will die Erfindung insgesamt Abhilfe schaffen.

Der Erfindung liegt das technische Problem zugrunde, einen derartigen Reaktor für die katalytische Umsetzung von Reaktionsmedien in einem Reaktionsraum mittels eines Katalysators so weiterzuentwickeln, dass ein einfacher Austausch des Katalysators gelingt und eine höhere Wirtschaftlichkeit im Vergleich zum Stand der Technik erzielt wird.

Zur Lösung dieser technischen Problemstellung ist ein gattungsgemäßer Reaktor im Rahmen der Erfindung dadurch gekennzeichnet, dass der jeweilige Füllkörper als vom Plattenwärmetauscher konstruktiv unabhängig ausgebildeter Träger für den Katalysator ausgeführt und folglich wahlweise in einen den Reaktionsraum definierenden Plattenzwischenraum einsetzbar und hieraus wieder entfernbar ausgelegt ist, wobei der jeweilige Füllkörper eine einstellbare Eindringtiefe im Plattenzwischenraum aufweist

Erfindungsgemäß kommt also zunächst einmal ein Füllkörper zum Einsatz, der konstruktiv unabhängig vom Plattenwärmetauscher ausgelegt ist. Das bedeutet, dass der Plattenwärmetauscher als solches den Füllkörper zu seiner Realisierung weder benötigt noch der Füllkörper Bestandteil der Konstruktion des Plattenwärmetauschers ist oder sein muss. Eine solche Auslegung steht im Gegensatz zu der Ausführungsform nach der EP 2 045 006 A1, bei welcher die dort angesprochenen Katalysatorkörbe (vgl. [0066]) zwingend als Abstandhalter ausgebildet sind und folglich eine feste Verbindung mit den jeweiligen Wärmetauscherplatten eingehen (müssen).

Demgegenüber übernehmen die erfindungsgemäßen Füllkörper weder eine verbindende noch beabstandende noch sonst wie geartete Funktion bei der Realisierung des Plattenwärmetauschers aus den einzelnen Wärmetauscherplatten. Das heißt, der Plattenwärmetauscher ist konstruktiv unabhängig von dem einen oder den mehreren Füllkörpern ausgelegt und kann unabhängig von den Füllkörpern aufgebaut werden.

Die Füllkörper fungieren im Vergleich zu dem Plattenwärmetauscher bzw. den einzelnen Wärmetauscherplatten folglich wie Einsätze bzw. Taucheinsätze, die den jeweiligen Plattenzwischenraum ganz oder teilweise ausfüllen oder eben nicht. Dadurch ist bereits ein besonders einfacher Austausch und Ersatz etwaiger verbrauchter oder auch vergifteter Katalysatoren problemlos möglich. Außerdem kann der erfindungsgemäße Reaktor wahlweise mit und ohne Katalysator betrieben werden. Das heißt, die einzelnen Prozesse, einerseits die katalytischer Umsetzung des Reaktionsmediums und andererseits die Funktion des Wärmeaustausches sind funktional und konstruktiv voneinander getrennt.

Ganz abgesehen davon erreicht der erfindungsgemäße Reaktor seine maximale Stabilität ganz unabhängig von den Füllkörpern, von ihrer Anzahl und auch ihrer Auslegung. Nach vorteilhafter Ausgestaltung kann der Füllkörper mit einstellbarer Eindringtiefe im Plattenzwischenraum angeordnet und platziert werden. Hierzu gehört eine bestimmte Eindringtiefe bzw. Eintauchtiefe in den betreffenden Plattenzwischenraum.

Diese Eindringtiefe bzw. Eintauchtiefe mag beispielsweise die Hälfte oder dreiviertel der maximal möglichen Eintauchtiefe bzw. Eindringtiefe in den Plattenzwischenraum betragen. Dadurch lässt sich je nach Bedarf das tatsächlich erforderliche Volumen des Katalysators in weiten Grenzen einstellen. Es werden also erfindungsgemäß nur so viel Katalysatoren bzw. Katalysatorpartikel in den Plattenzwischenraum eingebracht, wie für die anschließende katalytische Umsetzung des Reaktionsmediums tatsächlich benötigt werden. Das reduziert nicht nur den Energieaufwand, sondern auch etwaige Abfallmengen bei der Entsorgung des Katalysators.

Außerdem lässt sich hierdurch die Kontaktfläche bzw. Wärmetauschfläche zwischen dem Katalysator respektive dem den Katalysator tragenden Füllkörper und der einseitigen bzw. den beidseitigen Wärmetauscherplatten minimieren. Auf diese Weise können die Heizfläche bzw. Kühlfläche ebenfalls größenmäßig eingestellt werden. Außerdem wird hierdurch die Abfuhr oder Zufuhr von Wärme verbessert. Denn der Wärmeaustausch findet unmittelbar am Ort der Entstehung statt.

Als denkbare Reaktionsmedien kommen sowohl Gase als auch Flüssigkeiten sowie Mischphasen im Sinne von gasförmig/flüssig, gasförmig/fest sowie grundsätzlich auch feste Phasen in Frage. Dabei mag das jeweilige Reaktionsmedium durch Chemisorption, Absorption, Adsorption etc. mit dem Katalysator wechselwirken. Im Rahmen der katalytischen Umsetzung sind grundsätzlich Oxidationsvorgänge ebenso wie Reduktionsvorgänge denkbar. Genauso gut physikalisch-thermische Umwandlungen.

Ein Beispiel stellt die Herstellung von Ethylenoxid aus Ethylen und Sauerstoff in der Gasphase dar, wie es auch bereits im Zusammenhang mit der EP 1 234 612 A2 beschrieben worden ist. Außerdem lassen sich Kohlenwasserstoffe oxidieren, insbesondere Alkane und Alkene. Darüber hinaus mag der Reaktor für die Herstellung von Acrylsäure, Propylenoxid usw. eingesetzt werden, wie dies im Rahmen der DE 100 31 347 A1 im Detail beschrieben wird. Ein weiteres und besonders hervorzuhebendes Anwendungsfeld liegt darin, Stickoxide aus Abgasen katalytisch zu entfernen und in Stickstoff sowie Wasser aufzuspalten. Diese Abgasbehandlung lässt sich besonders vorteilhaft für Dieselmotoren und insbesondere stationäre Dieselmotoren einsetzen.
Durch die Auslegung der jeweiligen Füllkörper als vom Plattenwärmetauscher konstruktiv unabhängig ausgebildete Träger für den Katalysator lassen sich einzelne Plattenwärmetauscher als Plattenwärmetauschermodule ausbilden und insgesamt modular zu einem Reaktor zusammenfügen. Die Behandlung von flüssigen Reaktionsmedien wird noch dadurch erleichtert, dass mit Hilfe des fraglichen Füllkörpers gezielt Kanäle im Reaktionsraum definiert werden können. Das heißt, der Füllkörper wird in diesem Fall genutzt, um spezielle Reaktionskanäle für das hierdurch hindurchströmende flüssige oder auch gasförmige Reaktionsmedium zur Verfügung zu stellen und vorzugeben. In diesem Zusammenhang hat es sich weiter bewährt, wenn der Füllkörper mit Leiteinrichtungen für das Reaktionsmedium ausgerüstet ist. Mit Hilfe dieser Leiteinrichtungen kann das (flüssige) Reaktionsmedium geführt und bei Bedarf im Reaktionsraum verwirbelt werden. Entsprechendes gilt natürlich auch für den Fall, dass mit einem gasförmigen Reaktionsmedium gearbeitet wird.

Um den Plattenzwischenraum zwischen den einzelnen benachbarten Wärmetauscherplatten von seiner Größe und Ausdehnung her einzustellen, sind typischerweise ein oder mehrere Abstandhalter vorgesehen. Mit Hilfe dieser Abstandhalter werden benachbarte Wärmetauscherplatten miteinander verbunden. Dadurch lassen sich sowohl mobile als auch halbmobile Reaktoren zur Verfügung stellen, kann also der Reaktor entsprechend und je nach Bedarf aufgebaut und betrieben werden.

Es hat sich bewährt, wenn der jeweilige Füllkörper flächig ausgebildet ist. In diesem Zusammenhang verfügt der Füllkörper regelmäßig über eine Flächenausdehnung, welche den Plattenzwischenraum vollständig oder nahezu vollständig ausfüllt. Für den Fall, dass der Füllkörper mit einer gegenüber der maximalen Eindringtiefe einstellbaren Eindringtiefe in den Plattenzwischenraum eintaucht, wird selbstverständlich nur mit einer entsprechend angepassten Flächenausdehnung gearbeitet.

Darüber hinaus empfiehlt die Erfindung, den jeweiligen Füllkörper mit einer an den Plattenzwischenraum angepassten Materialstärke auszurüsten. Diese Materialstärke berücksichtigt einerseits, dass der Füllkörper aus dem fraglichen Plattenzwischenraum problemlos entfernt und in diesen eingesetzt werden kann, also keine Verkantungen respektive Verkeilungen oder sonst wie mechanische Beeinträchtigungen bei diesem Vorgang beobachtet werden. Andererseits ist die Materialstärke des Füllkörpers aber auch nicht zu gering bemessen, um sicherzustellen, dass zwischen den Katalysatorpartikeln bzw. allgemein dem vom Füllkörper getragenen Katalysator und den benachbarten Wänden bzw. Wärmetauscherplatten der erforderliche Wärmeaustausch stattfindet und auch stattfinden kann.

In diesem Zusammenhang haben sich verschiedene Varianten als besonders günstig erwiesen. So kann der jeweilige Füllkörper beispielsweise mit dem Katalysator beschichtet werden. Dabei mag ähnlich vorgegangen werden, wie dies bereits die einleitend behandeltet EP 1 234 612 A2 mit Bezug zu den dort mit dem Katalysator beschichteten Wärmetauscherplatten beschreibt. Das heißt, anstelle der Wärmetauscherplatten wird erfindungsgemäß der jeweilige Füllkörper in vergleichbarer Art und Weise mit dem Katalysator beschichtet. Bei dem Füllkörper mag es sich generell um ein Metallblech handeln, welches mit der Beschichtung aus dem Katalysator ausgerüstet wird. Diese Beschichtung kann beispielsweise durch einen Pulverauftrag erfolgen, im Sinne einer chemischen Dampfabscheidung (CVD Chemical Vapour Deposition). Grundsätzlich ist auch eine physikalische Dampfabscheidung (PVD Physical Vapour Deposition) möglich. Darüber hinaus sind Methoden des Sputterns oder auch galvanometrische Methoden denkbar und werden umfasst.
In einer Variante ist es alternativ oder zusätzlich auch möglich, dass der jeweilige Füllkörper mit vom Katalysator belegten und nach außen hin offenen Hohlräumen ausgerüstet ist. Diese nach außen hin bzw. zum Reaktionsraum hin offenen Hohlräume mit den darin befindlichen Katalysatoren stellen sicher, dass der jeweilige Katalysatorwerkstoff mit dem durch den Reaktionsraum hindurch geführten Reaktionsmedium in Kontakt treten kann. Beispiele für solche Füllkörper können Lochbleche oder auch netzartige Strukturen sein. Hierzu mögen auch Riffelbleche oder Leitbleche gehören, die in ihren Riffelungen bzw. Vertiefungen mit dem gewünschten Katalysatorwerkstoff ausgerüstet werden.

Nach besonders vorteilhafter Ausgestaltung umschließt der Füllkörper netzartig bzw. maschenartig den im Inneren befindlichen Katalysator. Dabei wird typischerweise mit einer Maschenweite des Füllkörpers gearbeitet, die kleiner als der Partikeldurchmesser der hierin meistens aufgenommenen Katalysatorpartikel ausgelegt ist. Eine derartige Ausführungsform lässt sich besonders einfach herstellen und mit den Katalysatorpartikeln füllen. Denn der netzartige bzw. maschenartige Füllkörper verfügt typischerweise in der Art eines Schlauches oder Beutels über eine Öffnung, über welche die Katalysatorpartikel eingebracht werden können. Die netz- bzw. maschenartige Struktur des Füllkörpers sorgt dafür, dass die Katalysatorpartikel nicht nach außen treten können. Zugleich stellt diese Struktur sicher, dass der Katalysatorwerkstoff mit dem Reaktionsmedium in Wechselwirkung treten kann. Bei dem netz- bzw. maschenartigen Füllkörper mag es sich um ein Metallgewebe bzw. Drahtgewebe in plattenartiger Ausführungsform handeln.

Die Wärmetauscherplatten können als Thermobleche ausgebildet werden, wie sie im Detail in der zuvor bereits in Bezug genommenen DE 197 54 185 C1 beschrieben worden sind. Alternativ zu Thermoblechen oder zusätzlich zu Thermoblechen können auch Stegplatten, Rohr-an-Rohranordnungen, Prägeplatten etc. zur Realisierung der Wärmetauscherplatten eingesetzt werden. - Wie einleitend bereits ausgeführt, werden die einzelnen Wärmetauscherplatten vorteilhaft über Abstandhalter miteinander verbunden, um den Plattenzwischenraum zur Aufnahme des Füllkörpers zu definieren. Dabei hat es sich bewährt, wenn die Abstandhalter eine Tasche in dem fraglichen Plattenzwischenraum beschreiben, in welche der Füllkörper eingesetzt wird bzw. eingesetzt werden kann. Grundsätzlich ist es aber auch möglich, dass der Füllkörper von einem oder mehreren Abstandhaltern durchdrungen wird.

Wie zuvor bereits erläutert, ist der Füllkörper meistens aus Metall hergestellt. Bei diesem Metall handelt es sich vorteilhaft um ein solches, welches nicht mit dem Reaktionsmedium reagiert und auch über die erforderliche Temperaturbeständigkeit verfügt. Tatsächlich verhält sich das Metall bzw. der Werkstoff zur Realisierung des Füllkörpers im Vergleich zu dem Reaktionsmedium neutral, so dass dieses lediglich mit dem Katalysator bzw. den Katalysatorpartikeln wechselwirkt und auch nur mit diesen wechselwirken kann.

Im Folgenden wird die Erfindung anhand einer lediglich ein Ausführungsbeispiel darstellenden Zeichnung näher erläutert; es zeigen:
- Fig. 1: den erfindungsgemäßen Reaktor in einer schematischen Übersicht,
- Fig. 2: einen Schnitt durch die Fig. 1 im Detail und
- Fig. 3: verschiedene Varianten des erfindungsgemäß eingesetzten Füllkörpers.

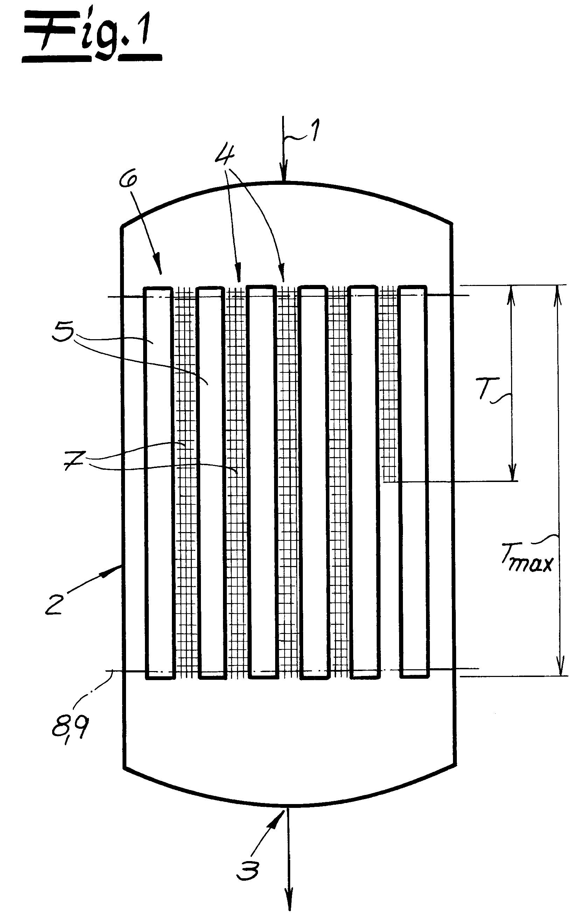

In der Fig. 1 ist ein Reaktor für die katalytische Umsetzung von Reaktionsmedien 1 dargestellt. Tatsächlich tritt das Reaktionsmedium 1 kopfseitig in einen Reaktor mit einem zylindrischen Gehäuse bzw. Reaktorbehälter 2 ein und verlässt den Reaktor bzw. dessen Gehäuse 2 über einen Ausgang bzw. Auslass 3 fußseitig des Reaktors. Grundsätzlich kann der Weg des Reaktionsmediums 1 natürlich auch umgekehrt erfolgen.

Im Inneren des Reaktors bzw. dessen Gehäuses 2 passiert das Reaktionsmedium 1 mehrere Reaktionsräume 4, die jeweils zwischen Wärmetauscherplatten 5 gebildet werden. Bei den Wärmetauscherplatten 5 handelt es sich im Ausführungsbeispiel um Thermobleche 5. Anstelle der Thermobleche 5 können alternativ auch Stegplatten zum Einsatz kommen, also voneinander durch Stege beabstandete Platten, die im Zwischenraum mit dem Wärmetauschermedium beaufschlagt werden. Ebenso sind Rohr-an-Rohranordnugen, Prägeplatten mit durchgängigen Hohlräumen etc. als Wärmetauscherplatten 5 denkbar. Selbstverständlich können auch Thermobleche 5 mit beispielsweise einer Stegplatte oder Prägeplatte kombiniert werden. Das ist im Detail jedoch nicht dargestellt.

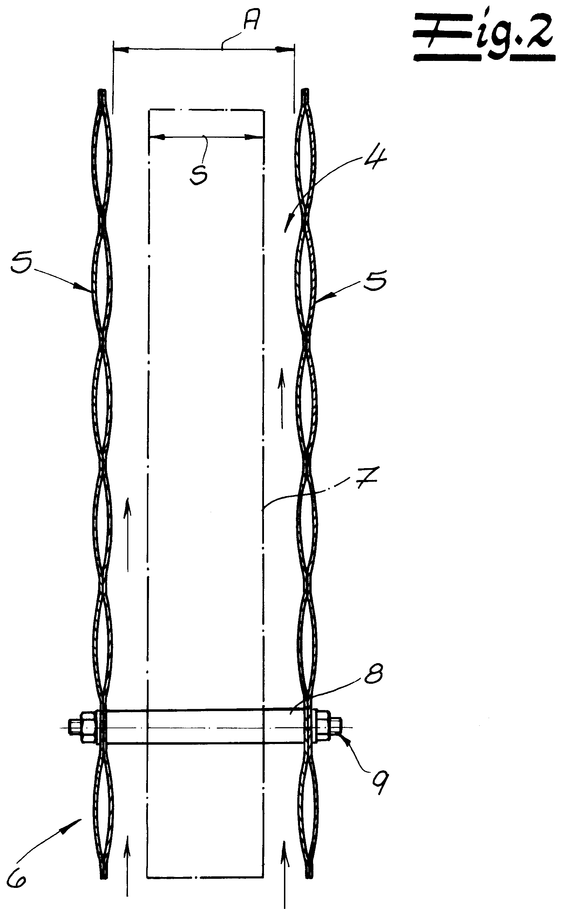

Die Thermobleche 5 sind so aufgebaut, dass zwei Bleche durch Punkt- und/oder Rollschweißungen miteinander verbunden sind. Dabei werden die Thermobleche 5 häufig unter Verwendung hydraulischen Drucks plastisch unter Kissenbildung ausgeformt, wie dies in der Schnitt- und Detaildarstellung nach Fig. 2 gezeigt ist. Durch die Kissenbildung werden automatisch kissenartige Kanäle für den Durchtritt von Wärmeträgermedium durch die Wärmetauscherplatten bzw. Thermobleche 5 gebildet. Das erkennt man anhand der Fig. 2.

Im Inneren des Reaktors bzw. des zugehörigen Gehäuses 2 ist insgesamt ein Plattenwärmetauscher 6 realisiert, welcher sich aus den einzelnen und voneinander beabstandeten Wärmetauscherplatten 5 zusammensetzt. Die Wärmetauscherplatten 5 definieren zwischen sich den jeweils vom Reaktionsmedium 1 durchströmten Reaktionsraum 4 bzw. die mehreren Reaktionsräume 4. Tatsächlich stellt sich zwischen benachbarten Wärmetauscherplatten 5 ein Plattenzwischenraum 4 ein, welcher den Reaktionsraum 4 definiert. Die einzelnen Wärmetauscherplatten 5 sind voneinander durch Füllkörper 7 getrennt. Die jeweiligen Füllkörper 7 füllen den zugehörigen Plattenzwischenraum 4 ganz oder teilweise aus.

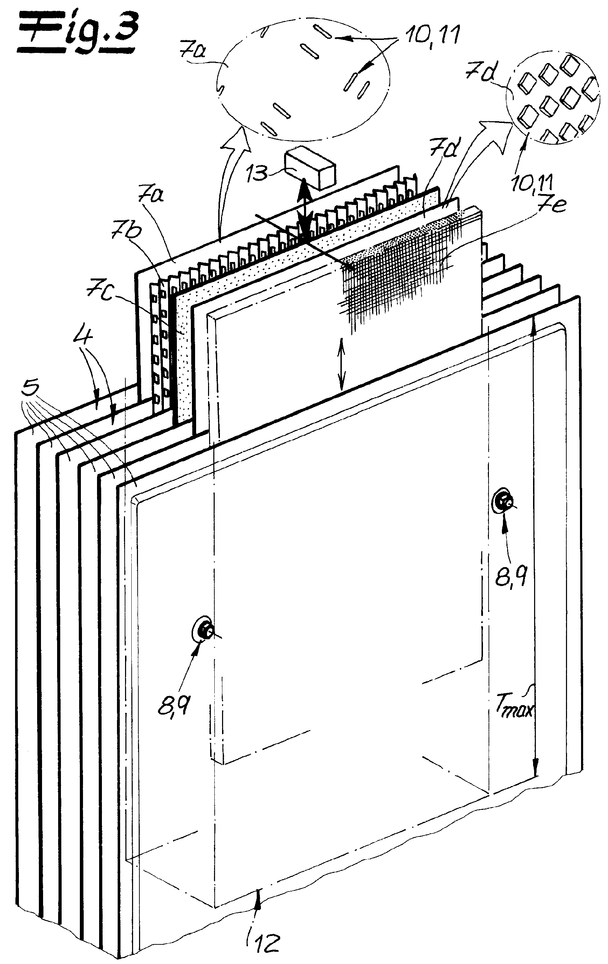

Im Rahmen des Ausführungsbeispiels nach Fig. 3 sind insgesamt fünf verschiedene Füllkörper 7a, 7b, 7c, 7d und 7e dargestellt. Die Aufzählung ist selbstverständlich nicht abschließend zu verstehen. Bei dem jeweiligen Füllkörper 7 handelt es sich um einen vom Plattenwärmetauscher 6 konstruktiv unabhängig ausgebildeten Träger 7 für den Katalysator. Dadurch lässt sich der Träger bzw. Füllkörper 7 wahlweise in den jeweiligen Plattenzwischenraum 4 einsetzen und aus dem Plattenzwischenraum 4 wieder entfernen.

Außerdem ermöglicht diese konstruktiv unabhängige Gestaltung, dass der Füllkörper 7 mit einer einstellbaren Eindringtiefe T in den fraglichen Plattenzwischenraum 4 eingesetzt werden kann. Diese einstellbare Eindringtiefe T kann höchstens der maximalen Eindringtiefe Tₘₐₓ entsprechen bzw. sich dieser maximalen Eindringtiefe Tₘₐₓ annähern. Je nach Auslegung und Ausprägung des Füllkörpers 7 füllt dieser also den fraglichen Plattenzwischenraum 4 ganz oder teilweise unter Berücksichtigung der einstellbaren Eindringtiefe T aus. Zur Variation der Eindringtiefe T wird der Füllkörper 7 mit Hilfe einer Stellvorrichtung 13 beaufschlagt. Die Stellvorrichtung 13 beaufschlagt einzelne oder alle Füllkörper 7 derart, dass diese die gewünschte Eindringtiefe T aufweisen. Das deutet ein Doppelpfeil in Fig. 3 an.

Zur Definition des Plattenzwischenraumes 4 können ein oder mehrere Abstandhalter 8, 9 realisiert sein. Im Rahmen des Ausführungsbeispiels setzt sich der Abstandhalter 8, 9 aus einer oder mehreren Distanzbuchsen 8 und einer Spannvorrichtung 9 zusammen. Grundsätzlich kann auch nur mit einer Distanzbuchse 8 bei Bedarf gearbeitet werden. Die Distanzbuchse 8 stellt den Abstand bzw. Plattenzwischenraum 4 zwischen den Wärmetauscherplatten 5 ein. Dieser Plattenzwischenraum 4 wird ganz oder teilweise von dem Füllkörper 7 ausgefüllt (vgl. Fig. 2).

Zu diesem Zweck mag der Füllkörper 7 flächig ausgelegt sein und den fraglichen Plattenzwischenraum 4 vollständig oder nahezu vollständig ausfüllen. Die Flächenausdehnung des Füllkörpers 7 ist entsprechend gestaltet. Außerdem verfügt der Füllkörper 7 ausweislich der Schnittdarstellung nach Fig. 2 über eine Materialstärke S, die an einen Abstand A der benachbarten Wärmetauscherplatten 5 und folglich an die Breite des Plattenzwischenraumes 4 angepasst ist.

Der jeweilige Füllkörper 7 kann mit einem Katalysator beschichtet sein, wie dies die Variante des Füllkörpers 7c entsprechend der Fig. 3 darstellt. Darüber hinaus kann der jeweilige Füllkörper 7 auch mit vom Katalysator belegten und nach außen hin offenen Hohlräumen 10 ausgerüstet werden. Derartige Hohlräume 10 finden sich bei dem Riffelblech 7a entsprechend der Variantendarstellung nach Fig. 3 und auch bei dem Leitblech 7d in der besagten Fig. 3. In beiden Fällen ist der Füllkörper 7 zusätzlich zu den Hohlräumen 10 mit Leiteinrichtungen 11 ausgerüstet, mit deren Hilfe das Reaktionsmedium 1 im Inneren des Plattenzwischenraumes 4 eine gewisse Führung und/oder Verwirbelung erfahren kann.

Eine andere Variante des Füllkörpers 7 sieht vor, dass dieser netzartig oder gewebeartig den im Inneren befindlichen Katalysator umschließt. Das zeigt die Alternative 7e nach der Fig. 3. Dort erkennt man, dass das fragliche Drahtgewebe als Gewebeplatte ausgebildet ist, die im Inneren die fraglichen Katalysatorpartikel aufnimmt. Das Gewebe bzw. die Gewebeplatte verfügt über einzelne Maschen, deren Größe jeweils kleiner als der Durchmesser der Katalysatorpartikel gestaltet ist. Dadurch wird verhindert, dass die von dem Füllkörper bzw. von dem Gewebe 7 umschlossenen Katalysatorpartikel aus dem fraglichen Gewebe heraus fallen.

Die einzelnen Abstandhalter 8, 9 können insgesamt eine Tasche 12 im Plattenzwischenraum 4 definieren. In diese Tasche 12 mag der Füllkörper 7 eingesetzt sein. Das macht die Fig. 3 deutlich. Grundsätzlich kann der Füllkörper 7 auch durch eine oder mehrere Abstandhalter 8, 9 durchdrungen werden. Der Füllkörper 7 ist insgesamt aus einem Metall hergestellt, welches nicht mit dem Reaktionsmedium 1 reagiert. Selbstverständlich können auch andere Materialien eingesetzt werden. Ebenso liegt es im Rahmen der Erfindung, wenn der Füllkörper 7 bewusst mit dem Reaktionsmedium 1 wechselwirkt, beispielsweise als (ergänzender) Katalysator. Dann wird der Füllkörper 7 nach einer bestimmten Zeit "verbraucht" und muss ausgetauscht werden. Sofern ein Gewebe bzw. eine Gewebeplatte als Füllkörper 7 zum Einsatz kommt, handelt es sich um ein Metallgewebe bzw. eine Metallgewebeplatte.

## Patentansprüche

1. Reaktor für die katalytische Umsetzung von Reaktionsmedien (1) in einem Reaktionsraum (4) mittels eines Katalysators, mit zumindest einem Plattenwärmetauscher (6) in einem Reaktorbehälter (2), wobei sich der Plattenwärmetauscher (6) im Wesentlichen aus voneinander durch flächig ausgebildete Füllkörper (7) getrennten Wärmetauscherplatten (5) zusammensetzt, welche zwischen sich den vom Reaktionsmedium (1) durchströmten Reaktionsraum (4) definieren,
**dadurch gekennzeichnet, dass**
- der jeweilige Füllkörper (7) als vom Plattenwärmetauscher (6) konstruktiv unabhängig ausgebildeter Träger (7) für den Katalysator ausgeführt und folglich wahlweise in einen den Reaktionsraum (4) definierenden Plattenzwischenraum (4) einsetzbar und hieraus wieder entfernbar ausgelegt ist, wobei
- der jeweilige Füllkörper (7) eine einstellbare Eindringtiefe (T) im Plattenzwischenraum (4) aufweist und
- der jeweilige Füllkörper (7) flächig mit einer dem Plattenzwischenraum (4) vollständig oder nahezu vollständig ausfüllenden Flächenausdehnung ausgerüstet ist.

2. Reaktor nach einem der Ansprüche 1, **dadurch gekennzeichnet, dass** der jeweilige Füllkörper (7) eine an den Plattenzwischenraum (4) angepasste Materialstärke (S) aufweist.

3. Reaktor nach einem der Ansprüche 1 oder 2, **dadurch gekennzeichnet, dass** der jeweilige Füllkörper (7) mit dem Katalysator beschichtet ist.

4. Reaktor nach einem der Ansprüche 1 bis 3, **dadurch gekennzeichnet, dass** der jeweilige Füllkörper (7) mit vom Katalysator belegten und nach außen hin offenen Hohlräumen (10) ausgerüstet ist.

5. Reaktor nach einem der Ansprüche 1 bis 4, **dadurch gekennzeichnet, dass** der jeweilige Füllkörper (7) netzartig den im Inneren befindlichen Katalysator umschließt.

6. Reaktor nach Anspruch 5, **dadurch gekennzeichnet, dass** sämtliche Maschen des Füllkörpers (7) kleiner als der Partikeldurchmesser der Katalysatorpartikel ausgebildet sind.

7. Reaktor nach einem der Ansprüche 1 bis 6, **dadurch gekennzeichnet, dass** der Füllkörper (7) mit Leiteinrichtungen (11) für das Reaktionsmedium (1) ausgerüstet ist.

8. Reaktor nach einem der Ansprüche 1 bis 7, **dadurch gekennzeichnet, dass** zur Definition des Plattenzwischenraumes (4) eine oder mehrere Abstandhalter (8, 9) vorgesehen sind, welche benachbarte Wärmetauscherplatten (5) miteinander verbinden.

9. Reaktor nach Anspruch 8, **dadurch gekennzeichnet, dass** der Füllkörper (7) in eine von den Abstandhaltern (8, 9) definierte Tasche (12) im Plattenzwischenraum (4) eingesetzt ist.

10. Reaktor nach Anspruch 8 oder 9, **dadurch gekennzeichnet, dass** der Füllkörper (7) von einem oder mehreren Abstandhaltern (8, 9) durchdrungen ist.

11. Reaktor nach einem der Ansprüche 1 bis 10, **dadurch gekennzeichnet, dass** der Füllkörper (7) aus einem Metall hergestellt ist.

12. Reaktor nach Anspruch 11, **dadurch gekennzeichnet, dass** es sich bei dem Metall um ein nicht mit dem Reaktionsmedium (1) reagierendes Metall handelt.

13. Reaktor nach einem der Ansprüche 1 bis 12, **dadurch gekennzeichnet, dass** die Wärmetauscherplatten (5) als Thermobleche (5) ausgebildet sind.

## Claims

1. A reactor for the catalytic conversion of reactive media (1) in a reaction space (4) by a catalyst, comprising at least one plate heat exchanger (6) in a reactor container (2), wherein the plate heat exchanger (6) is substantially formed by heat-exchanger plates (5) separated from one another by packings (7) of planar form, said heat-exchanger plates defining between them the reaction space (4) through which the reactive medium (1) flows,
**characterized in that**
- the packing (7) in each case is configured as a support (7) for the catalyst whose construction is independent of the plate heat exchanger (6) and which can therefore be selectively inserted into and removed from a between-plate space (4) defining the reaction space (4), wherein
- the packing (7) in each case has an adjustable penetration depth (T) in the between-plate space (4) and
- the packing (7) in each case is equipped with a flat extensive area that completely or almost completely fills the between-plate space (4).

2. The reactor according to claim 1, **characterized in that** the packing (7) in each case has a material thickness (S) adjusted to the between-plate space (4).

3. The reactor according to one of claims 1 or 2, **characterized in that** each packing (7) is coated with the catalyst.

4. The reactor according to one of claims 1 to 3, **characterized in that** the packing (7) in each case is provided with recesses (10) that are coated with the catalyst and open towards the outside.

5. The reactor according to one of claims 1 to 4, characerized in that packing (7) in each case surrounds the inner catalyst in a mesh-like manner.

6. The reactor according to claim 5, **characterized in that** all meshes of the packing (7) are smaller than the particle diameter of the catalyst particles.

7. The reactor according to one of claims 1 to 6, **characterized in that** the packing (7) is provided with guides (11) for the reactive medium (1).

8. The reactor according to one of claims 1 to 7, **characterized in that** one or more spacers (8, 9) are provided to define the between-plate space (4), which connect adjacent heat-exchanger plates (5) to each other.

9. The reactor according to claim 8, **characterized in that** the packing (7) is inserted into a pocket (12) in the between-plate space (4) defined by the spacers (8, 9).

10. The reactor according to claim 8 or 9, **characterized in that** one or more spacers (8, 9) pass through the packing (7).

11. The reactor according to one of claims 1 to 10, **characterized in that** the packing (7) is made of a metal.

12. The reactor according to claim 11, **characterized in that** the metal is a metal that does not react with the reaction medium (1).

13. The reactor according to one of claims 1 to 12, **characterized in that** the heat-exchanger plates (5) are configured as thermal sheets (5).

## Revendications

1. Réacteur pour transformation catalytique de fluide de réaction (1) dans une chambre de réaction (4) au moyen d'un catalyseur, comportant au moins un échangeur de chaleur à plaques (6) dans un réservoir du réacteur (2), l'échangeur de chaleur à plaques (6) étant essentiellement composé de plaques d'échange de chaleur (5) séparées les unes des autres par des corps de remplissage de conformation superficielle (7) qui finissent entre elles la chambre de réaction (4) parcourue par le fluide de réaction (1),
**caractérisé en ce que**
- le corps de remplissage respectif (7) est réalisé sous forme de supports (7) réalisés au niveau de leur conception indépendamment de l'échangeur de chaleur à plaques (6) pour le catalyseur et par conséquent réalisé de manière à pouvoir au choix être inséré dans un intervalle entre les plaques (4) définissant la chambre de réaction (4) et à en être retiré,
- le corps de remplissage respectif (7) présente une profondeur de pénétration réglable (T) dans l'intervalle entre les plaques (4) et
- le corps de remplissage respectif (7) est pourvu superficiellement d'une extension surfacique remplissant complètement ou presque complètement l'intervalle entre les plaques (4).

2. Réacteur selon la revendication 1, **caractérisé en ce que** le corps de remplissage respectif (7) présente une épaisseur de matériau (S) adaptée à l'intervalle entre les plaques (4).

3. Réacteur selon une des revendications 1 ou 2, **caractérisé en ce que** le corps de remplissage respectif (7) est revêtu de catalyseur.

4. Réacteur selon une des revendications 1 à 3, **caractérisé en ce que** le corps de remplissage respectif (7) est pourvu de cavités (10) occupées par du catalyseur et ouvertes vers l'extérieur.

5. Réacteur selon une des revendications 1 à 4, **caractérisé en ce que** le corps de remplissage respectif (7) entoure à la manière d'un filet le catalyseur se trouvant à l'intérieur.

6. Réacteur selon la revendication 5, **caractérisé en ce que** toutes les mailles du corps de remplissage (7) sont inférieures au diamètre de particules des particules de catalyseur.

7. Réacteur selon une des revendications 1 à 6, **caractérisé en ce que** le corps de remplissage (7) est équipé de dispositifs de conduction (11) pour le fluide de réaction (1).

8. Réacteur selon une des revendications 1 à 7, **caractérisé en ce que**, pour définir l'intervalle entre les plaques (4), il est prévu un ou plusieurs écarteurs (8, 9) qui relient entre elles les plaques d'échangeur de chaleur voisines (5).

9. Réacteur selon la revendication 8, **caractérisé en ce que** le corps de remplissage (7) est inséré dans une poche (12) définie par les écarteurs (8, 9) dans l'intervalle entre les plaques (4).

10. Réacteur selon la revendication 8 ou 9, **caractérisé en ce que** le corps de remplissage (7) est traversé par un ou plusieurs écarteurs (8, 9).

11. Réacteur selon une des revendications 1 à 10, **caractérisé en ce que** le corps de remplissage (7) est fabriqué en métal.

12. Réacteur selon la revendication 11, **caractérisé en ce que** le métal est un métal ne réagissant pas avec le fluide de réaction (1).

13. Réacteur selon une des revendications 1 à 12, **caractérisé en ce que** les plaques de l'échangeur de chaleur (5) se présentent sous forme de tôles thermiques (5).
